# EUROPÄISCHE PATENTSCHRIFT

(11) **EP 1 280 427 B1**
(45) Veröffentlichungstag und Bekanntmachung des Hinweises auf die Patenterteilung: **26.10.2005**
(21) Anmeldenummer: 01927921.5
(22) Anmeldetag: 25.04.2001
(51) Int. Cl.: A24C 5/00, F25D 17/02

(54) **FLÜSSIGKEITSKÜHLSYSTEM FÜR PRODUKTIONSMASCHINEN DER TABAK VERARBEITENDEN INDUSTRIE**
LIQUID COOLING SYSTEM FOR PRODUCTION MACHINES OF THE TOBACCO-PROCESSING INDUSTRY
SYSTEME DE REFROIDISSEMENT DE LIQUIDE POUR MACHINES DE PRODUCTION DE L'INDUSTRIE DE TRAITEMENT DU TABAC

(30) Priorität: 06.05.2000 DE 10022138
(43) Veröffentlichungstag der Anmeldung: 05.02.2003
(73) Patentinhaber: Hauni Maschinenbau AG, 21033 Hamburg (DE)
(72) Erfinder: SCHICKE, Joachim, 21465 Wentorf (DE)
(86) Internationale Anmeldenummer: PCT/EP2001/004637
(87) Internationale Veröffentlichungsnummer: WO 2001/084970

(56) Entgegenhaltungen:
- EP-A- 0 313 473
- EP-A- 0 709 625
- WO-A-99/63799
- US-A- 5 462 071

## Beschreibung

Die Erfindung betrifft ein Flüssigkeitskühlsystem für Maschinenkomponenten von Produktionsmaschinen der Tabak verarbeitenden Industrie.
Unter dem Begriff "Produktionsmaschinen der Tabak verarbeitenden Industrie" werden erfindungsgemäß verstanden Maschinen, deren Einzelkomponenten und Steuerungsaggregate (Schaltschränke) zum Herstellen von Rauchartikeln sowie deren Filterkomponenten, Verpackungsmaschinen für derartige Artikel, in aus derartigen Maschinen gebildeten Produktionslinien eingebundene Handhabungs- und Förderaggregate sowie Maschinen und Einrichtungen zur Tabakvorbereitung wenigstens im Einsatzbereich leistungsstarker Antriebseinheiten oder größerer Wärmeerzeuger.
Durch die US-PS 5 462 071 ist eine Anordnung zum Begrenzen der Betriebstemperatur von in klimatisierten Betriebsräumen untergebrachten Produktionsmaschinen der Tabak verarbeitenden Industrie bekannt geworden. Dabei sind die Produktionsmaschinen oder deren Einzelkomponenten mit einen Flüssigkeitskühlsystem versehen, das mit einer außerhalb des Betriebsraumes installierten Rückkühlungseinrichtung verbunden ist. Die Kühlflüssigkeit für Produktionsmaschinen, z. B. Zigarettenmaschinen oder Filteransetzmaschinen, wird deren zu kühlenden Aggregaten zugeführt und nach Erwärmung aus dem Betriebsraum geleitet, um nach Rückkühlung wieder in den-Betriebsraum und zu den Aggregaten der Produktionsmaschinen zurück geleitet zu werden.
Aus der WO 99/63799 A1 ist eine Kühlvorrichtung für Telekommunikationsanlagen bekannt, in welcher wärmebeladene Kühlluft über flüssigkeitsdurchströmte Rückkühler geleitet wird, wobei die Rückkühler zur Erhöhung der Funktionssicherheit mehrere redundante Flüssigkeitskreisläufe aufweisen.
Die der Erfindung zugrunde liegende Aufgabe besteht darin, die Kühlung von eingangs genannten Produktionsmaschinen der Tabak verarbeitenden Industrie zu verbessern.
Gemäß der Erfindung wird dies dadurch erreicht, dass die als geschlossenes System ausgebildete Flüssigkeitskühlung in mindestens zwei Flüssigkeitskreisläufe aufgeteilt ist.
Gemäß einer wichtigen Weiterbildung der Erfindung sind in einem ersten Flüssigkeitskreislauf leistungsstarke Maschinenkomponenten und in einem zweiten Flüssigkeitskreislauf leistungsschwächere Maschinenkomponenten integriert. Die ersten und zweiten Teilkreisläufe können auch jeweils mehrere Teilkreisläufe aufweisen.

In weiterer Ausgestaltung der Erfindung ist der erste Flüssigkeitskreislauf zur Kühlung von leistungsstarken Maschinenkomponenten in Form von motorischen Antrieben vorgesehen. Der zweite Flüssigkeitskreislauf kann dann zur Kühlung von leistungsschwächeren Maschinenkomponenten in Form von Steuerungsorganen und/oder Vakuumpumpen vorgesehen sein.
Die vorerwähnten leistungsschwächeren Maschinenkomponenten, insbesondere Steuerungsorgane wie Schaltschränke und dergl., werden im allgemeinen mittels Luft gekühlt. Die durch die Kühlung erwärmte Luft wird gemäß der Erfindung einem Wärmetauscher zugeführt, der von Kühlflüssigkeit des zweiten Flüssigkeitskreislaufs durchströmt wird, und in dem die den Wärmetauscher ebenfalls durchströmende Kühlluft rückgekühlt wird.
Gemäß einer vorteilhaften Weiterbildung der Erfindung wird die Kühlflüssigkeit, die in einem Wärmetauscher des zweiten Flüssigkeitskreislaufs Wärme von Kühlluft, die Steuerorgane oder dergl. durchströmt hat, aufgenommen hat und/oder die Kühlflüssigkeit, die in dem ersten Flüssigkeitskreislauf Wärme insbesondere von motorischen Antrieben aufgenommen hat, einem Wärmetauscher zugeführt, der zur Rückkühlung der Kühlflüssigkeiten von Luft oder von Flüssigkeit durchströmt wird.

Die vorerwähnten Kühlflüssigkeiten des ersten und/oder zweiten Flüssigkeitskreislaufes sowie die Flüssigkeit zur Aufnahme der Wärme aus diesen Kühlflüssigkeiten sind bevorzugt Wasser, doch können wegen der geschlossenen Kreisläufe auch andere geeignete Flüssigkeiten vorgesehen werden.
Ein oder mehrere Wärmetauscher zur Rückkühlung der Kühlflüssigkeiten mittels Luft oder Flüssigkeit werden vorteilhaft über einer Produktionsmaschine, d. h. über deren oberen Begrenzungsflächen angeordnet, wenn dort ausreichend Platz ist, da in diesem Fall kein teurer Platz neben einer Maschine in Anspruch genommen werden muss. Es ist aber auch möglich, einen Wärmetauscher neben einer Produktionsmaschine oder sogar außerhalb eines Betriebsraumes, in dem sich Produktionsmaschinen befinden, anzuordnen. Es ist auch möglich, für mehrere Produktionsmaschinen nur einen Wärmetauscher über oder neben einer Produktionsmaschine oder außerhalb des Betriebsraums anzuordnen.
Die zur Führung von Kühlflüssigkeit benötigten Rohrleitungen können gemäß einer bevorzugten Ausgestaltung der Erfindung, der selbständiger erfinderischer Rang zukommt, aus Metall, insbesondere Aluminium, bestehen, das innen und außen mit resistentem Kunststoff beschichtet ist. Die Innenbeschichtung kann z. B. korrosionsbeständiges sogenanntes PE-Xc-Material, die Außenbeschichtung sogenanntes PE-X-Material aufweisen. Das zuletzt genannte Material ist besonders resistent gegen mechanische Beanspruchungen. Rohrleitungen, wie vorstehend beschrieben, sind im Gegensatz zu reinen Kunststoffrohren formstabil infolge des Metallrohres, das bei Verwendung von Aluminium trotzdem leicht zu biegen ist und kleine Biegeradien zulässt. Die Rohrleitungen sind innen gegen chemische Belastungen, außen gegen mechanische Belastungen besonders resistent. Die Verpressung in sogenannten Presshülsen zwecks Verbindung derartiger Rohrleitungen mit anderen Rohrleitungen ist besonders einfach zu bewerkstelligen. Rohre der beschriebenen Art werden unter dem Namen "Polyfix MT" von der Firma POLYTHERM GMBH, 48607 Ochtrup, DE, vertrieben.

Die Erfindung weist besondere Vorteile auf:
Die beiden Flüssigkeitskreisläufe sind so aufeinander abstimmbar, dass die Verbraucher nach Temperatur und Leistung zueinander passen. Daher können die Rohrquerschnitte und Pumpen klein gehalten werden. Bei Ausfall eines Flüssigkeitskreislaufes (Pumpe, Lüfter, Wärmetauscher) kann der anderer Flüssigkeitskreislauf weiter betrieben werden. Das Kühlsystem gemäß der Erfindung lässt sich im Inneren der Maschine so aufbauen, dass Verrohrung, Motoren und elektrische Schaltschränke unverändert bleiben können.

Die Erfindung wird anhand eines Ausführungsbeispiel näher erläutert.

Es zeigen:
- Figur 1: schematisch zwei Kühlflüssigkeitskreisläufe, von denen einer (erster Flüssigkeitskreislauf) leistungsstärkere Verbraucher, während ein zweiter (zweiter Flüssigkeitskreislauf) leistungsschwächere Verbraucher aufweist,
- Figur 2: schematisch eine Darstellung des Kühlsystems einer aus Zigarettenmaschine und Filteransetzmaschine bestehenden Produktionsanlage für Filterzigaretten mit zwei Flüssigkeitskreisläufen und den zugehörigen leistungsstärkeren bzw. leistungsschwächeren Maschinenkomponenten und mit einer durch Luft erfolgenden Rückkühlung der Kühlflüssigkeiten,
- Figur 3: ein dem in Figur 2 beschriebenen Kühlsystem entsprechendes Kühlsystem, das jedoch, abweichend von dem Kühlsystem der Figur 2, eine durch eine Flüssigkeit bewirkte Rückkühlung der Kühlflüssigkeiten aufweist.

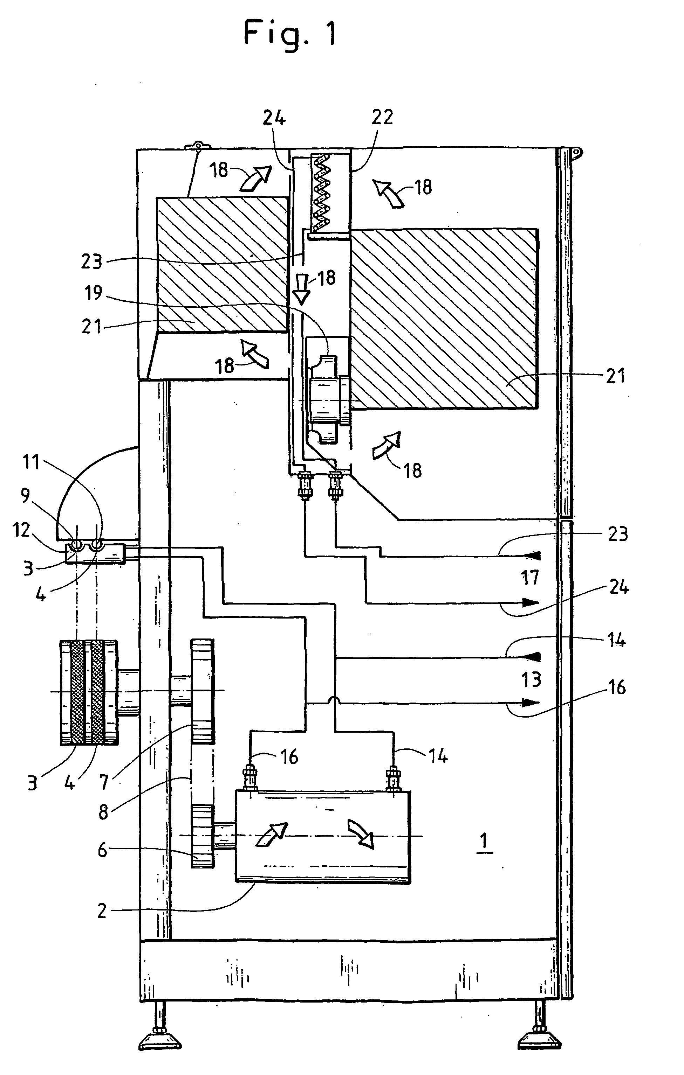

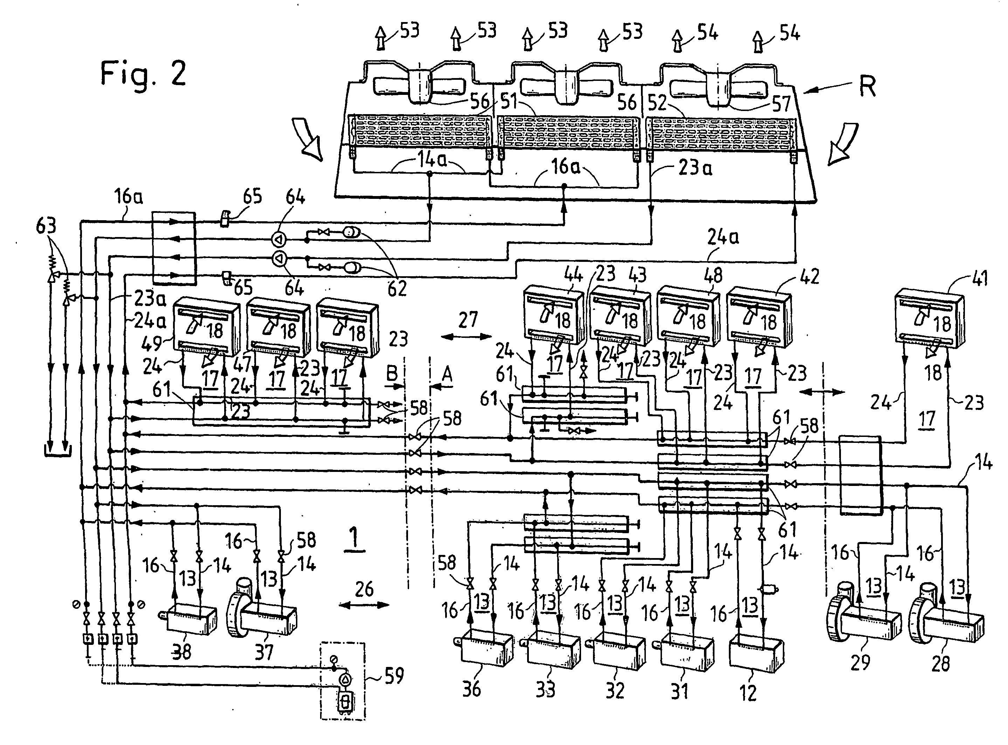

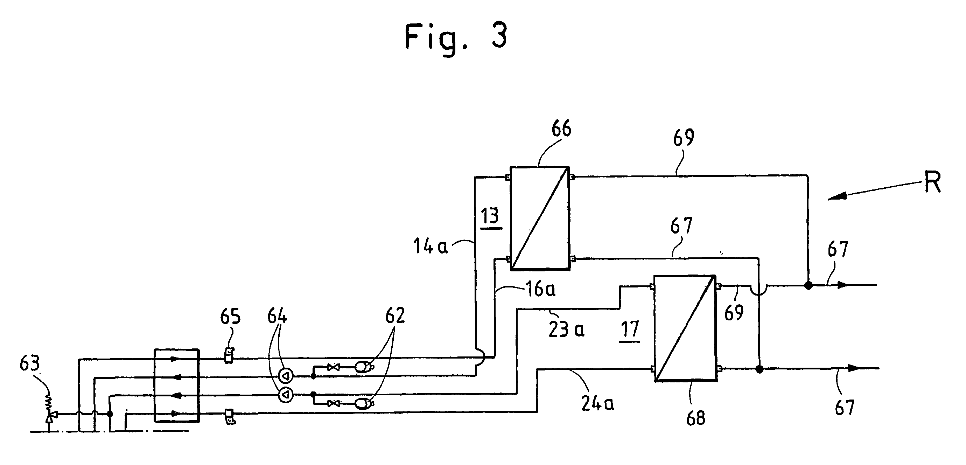

In Figur 1 ist schematisch eine Zigarettenmaschine 1, z. B. vom in der Zigarettenindustrie bekannten Typ PROTOS 90 oder PROTOS 2 der Anmelderin, bestehend aus Filterstrangmaschine A und angeschlossener Filteransetzmaschine B (Fig. 2) zum Herstellen von Zigaretten dargestellt. Die Antriebsmotoren der Masehine 1 sind durch den Block 2 symbolisiert. Es kann sich dabei um Motoren für die Hauptantriebe, z. B. zum Antrieb von im Einzelnen nicht dargestellten Gebläsen, eines Ablegers, einer Zugwalze, eines umlaufenden Messerträgers und zweier Formatbänder 3 und 4 handeln. Die jeweilige Momentenübertragung ist durch Zahnscheiben 6, 7 und einen Zahnriemen 8 symbolisiert. Zum Kühlen der vorerwähnten Motoren entsprechend Block 2 und der Formatbänder 3 und 4, von denen Zigarettenstränge 9 bzw. 11 unter Aufbringung beachtlicher Reibkräfte und Erzeugung entsprechend hoher Reibungstemperaturen in einer Formatkonsole 12 bewegt werden, dient ein erster geschlossener Flüssigkeitskreislauf 13, in dem Beispiel ein Kühlwasserkreislauf, in dem kühles Wasser durch die Rohrleitungen (Rohr) 14 zu den leistungsstarken Motoren 2 und der Formatkonsole 12 geführt ist. Das erwärmte Wasser wird durch die Rohre 16 zu einer in Figur 1 nicht dargestellten, anhand der Figuren 2 und 3 beschriebenen Rückkühlungseinrichtung geführt.
Ein zweiter geschlossener Flüssigkeitskreislauf 17, in dem Beispiel ebenfalls ein Kühlwasserkreislauf, dient zum Kühlen von Kühlluft 18, die von einem Gebläse 19 erzeugt wird und die elektrische Steuerungsorgane, z. B. Schaltschränke 21, durchströmt und sich dabei erwärmt. Zur Rückkühlung der Kühlluft 18 dient ein innerhalb der Zigarettenmaschine 1 angeordneter Wärmetauscher 22, dem durch Rohrleitung 23 (Rohr) kühles Wasser zugefördert wird, das durch Rohr 24 wieder abgefördert wird.

In Figur 2 ist eine erste Gruppe 26 von leistungsstärkeren Maschinenkomponenten dargestellt, die von einem ersten Kühlwasserkreislauf 13 gekühlt werden. Eine zweite Gruppe 27 von leistungsschwächeren Maschinenkomponenten wird von einem zweiten Kühlwasserkreislauf 17 gekühlt. Bei der ersten Gruppe 26 von Energieverbrauchern handelt es sich z. B. um leistungsstarke elektromotorische Antriebe einer aus Zigarettenstrangmaschine A und Filteransetzmaschine B bestehenden Zigarettenmaschine 1. Mit einem Antrieb 28 für ein Saugluftgebläse, einem Antrieb 29 für ein Umluftgebläse, einem Antrieb 31 für Zugwalzen, einem Antrieb 32 für Formatbänder (3, 4 in Figur 1), einem Antrieb 33 für einen umlaufenden Messerträger, einem Antrieb 36 für eine rotierende Ablegeranordnung, einem Antrieb 37 für ein Gebläse einer Filteransetzmaschine und einem Hauptantrieb 38 für die Filteransetzmaschine selbst. Mit 12 (Figur 1) ist eine zu kühlende Formatkonsole dargestellt. Die erwähnten Aggregate mit den Antrieben 28... 38 der ersten Gruppe 26 sind in der Technik der Zigarettenherstellung wohl bekannt und brauchen daher nicht näher erläutert zu werden. Sie werden von dem ersten Kühlwasserkreislauf 13 über die Rohre 14 mit Kühlwasser versorgt, das Wärme aufnimmt und über die Rohre 16 abgeleitet wird.
Bei der zweiten Gruppe 27 von Energieverbrauchem handelt es sich um leistungsschwächere Energieverbraucher der Zigarettenmaschine 1, nämlich um in der Maschine angeordnete Schaltschränke 41, 42, 43, 44, 46 und 47 mit Steuerungselementen sowie um Steuerpulte 48 mit Bedienungsfeld und um eine Vakuumpumpe 49. Die vorerwähnten Schaltschränke können, zumindest zum Teil, zur Steuerung der elektromotorischen Antriebe der Gruppe 26 dienen. Ein zweiter Kühlwasserkreislauf 17 kühlt über nicht dargestellte Wärmetauscher (entsprechend Position 22 in Figur 1) Kühlluft (entsprechend Position 18 in Figur 1), die von Gebläsen (entsprechend Position 19 in Figur 1) durch die Schaltschränke mit den Steuerungselementen (Position 21 in Figur 1) gedrückt wird und letztere dabei kühlt. Das Kühlwasser wird über Rohre 23 den Wärmetauschern zugeführt und fließt nach Wärmeaufnahme über Rohre 24 wieder ab.
Das abfließende Kühlwasser beider Kühlwasserkreisläufe 13 und 17 gelangt über Sammelleitungen 16a bzw. 24a zu einer Rückkühleinrichtung R mit Wärmetauschern 51 bzw. 52, in denen es durch Kühlluftströme 53 bzw. 54 rückgekühlt wird. Die Luftströme werden durch Ventilatoren 56 bzw. 57 durch die Wärmetauscher gesogen. Das gekühlte Wasser der Kühlwasserkreisläufe 13 und 17 gelangt über Sammelleitungen 14a bzw. 23a wieder zu den zu kühlenden Verbrauchern der Gruppen 26 bzw. 27.
Mit Doppeldreiecken, etwa entsprechend Position 58, sind Absperrhähne bezeichnet. 59 stellt eine Befülleinrichtung dar. 61 sind Ventilblöcke, 62 Membranausgleichsbehälter, 63 Sicherheitsventile, 64 Pumpen und 65 Luftabscheider.

Figur 3 zeigt eine Variante der Rückkühleinrichtung R für das erwärmte Kühlwasser des ersten Wasserkreislaufs und des zweiten Wasserkreislaufs 17. Das erwärmte Wasser des ersten Wasserkreislaufs 13 wird über Rohrleitungen 16a zu einem Wärmetauscher 66 geführt, dem über eine Rohrleitung 67 Kühlflüssigkeit, vorzugsweise Kühlwasser, zugeführt wird. Das im Wärmetauscher 66 gekühlte Wasser des ersten Wasserkreislaufs 13 gelangt über Rohr 14a zu den Verbrauchern der ersten Gruppe 26 zurück, die gekühlt werden, wie in Figuren 1 und 2 beschrieben. Das erwärmte Wasser des zweiten Wasserkreislaufs 17 wird über Rohrleitung 24a zu einem Wärmetauscher 68 geleitet, dem durch die Rohrleitung 67 ebenfalls Kühlflüssigkeit, vorzugsweise Kühlwasser, zugeführt wird. Das im Wärmetauscher 68 gekühlte Wasser des zweiten Wasserkreislaufes gelangt über Rohr 23a zu den Verbrauchern der zweiten Gruppe 27 zurück, die gekühlt werden, wie in den Figuren 1 und 2 beschrieben. Das erwärmte Kühlwasser (Rückkühlwasser) aus den Wärmetauschern 66 und 68 wird über eine Rohrleitung 69 abgeführt.

Die Rückkühleinrichtungen R mit den Aggregaten 51... 57; 66 und 68 sind vorteilhaft Platz sparend über einer Produktionsmaschine 1 angeordnet, d. h. über deren oberen Abschlussflächen. Sie können aber auch neben einer Maschine angeordnet sein. Außerdem kann eine Kühleinrichtung für zwei oder mehr Produktionsmaschinen über einer oder neben einer solchen Maschine angeordnet sein.
Schließlich können die Rückkühlungseinrichtungen außerhalb des Betriebsraumes angeordnet sein, indem sich die Produktionsmaschinen befinden. Ist eine Kühlwasserversorgung vorhanden, so kann sie direkt einen oder beide Kühlwasserkreisläufe 13 und 17 mit Kühlwasser versorgen. so dass die Rückkühleinrichtungen R entfallen können. Für Notfälle im Versagensfall einer Rückkühleinrichtung kann ein Notanschluss an ein Wassernetz vorgesehen sein.

## Patentansprüche

1. Flüssigkeitskühlsystem für Maschinenkomponenten von Produktionsmaschinen der Tabak verarbeitenden Industrie, **dadurch gekennzeichnet, dass** die als geschlossenes System ausgebildete Flüssigkeitskühlung in mindestens zwei Flüssigkeitskreisläufe (13, 17) aufgeteilt ist, wobei in einem ersten Flüssigkeitskreislauf (13) leistungsstarke Maschinenkomponenten (26, 12, 28... 38) und in einem zweiten Flüssigkeitskreislauf (17) leistungsschwächere Maschinenkomponenten (27, 42... 48) integriert sind.

2. Flüssigkeitskühlsystem nach Anspruch 1, **dadurch gekennzeichnet, dass** der erste Flüssigkeitskreislauf zur Kühlung von leistungsstarken Maschinenkomponenten in Form von motorischen Antrieben (2) vorgesehen ist.

3. Flüssigkeitskühlsystem nach einem oder mehreren der vorhergehenden Ansprüche, **dadurch gekennzeichnet, dass** der zweite Flüssigkeitskreislauf zur Kühlung von leistungsschwächeren Maschinenkomponenten in Form von Steuerungsorganen (19) vorgesehen ist.

4. Flüssigkeitskühlsystem nach einem oder mehreren der vorhergehenden Ansprüche, **dadurch gekennzeichnet, dass** die leistungsschwächeren Maschinenkomponenten von Kühlluft (18) gekühlt sind, die zur Rückkühlung einem Wärmetauscher (22) zugeführt ist, der von der Kühlflüssigkeit (23, 24) durchströmt ist.

5. Flüssigkeitskühlsystem nach einem oder mehreren der vorhergehenden Ansprüche, **dadurch gekennzeichnet, dass** die in dem Wärmetauscher (22) Wärme aus der Kühlluft (18) aufnehmende Kühlflüssigkeit (23, 24) und/oder die Kühlflüssigkeit (14, 16) für die motorischen Antriebe einem Wärmetauscher (51, 52; 66, 68) zugeführt sind, der von Wärme aufnehmender Luft (53, 54) oder von Wärme aufnehmender Flüssigkeit (67, 69) durchströmt ist.

6. Flüssigkeitskühlsystem nach einem oder mehreren der vorhergehenden Ansprüche, **dadurch gekennzeichnet, dass** die Kühlflüssigkeit Wasser ist.

7. Flüssigkeitskühlsystem nach einem oder mehreren der vorhergehenden Ansprüche 4 bis 6, **dadurch gekennzeichnet ,dass** ein oder mehrere Wärmetauscher (R) über einer Produktionsmaschine (1) angeordnet ist.

8. Flüssigkeitskühlsystem nach Anspruch 4 bis 6, **dadurch gekennzeichnet, dass** ein oder mehrere Wärmetauscher neben einer Produktionsmaschine oder außerhalb eines Betriebsraums angeordnet ist.

9. Flüssigkeitskühlsystem nach einem oder mehreren der vorhergehenden Ansprüche, **dadurch gekennzeichnet, dass** Rohrleitungen (14, 16; 23, 24) für Kühlflüssigkeit aus Metall vorzugsweise Aluminium vorgesehen sind, die innen mit PE-Xc-Material, außen mit PE-X-Material beschichtet sind.

## Claims

1. Liquid cooling system for machine components of production machines of the tobacco-processing industry, **characterized in that** the liquid cooling designed as a closed system is divided into at least two liquid circuits (13, 17), wherein in a first liquid circuit (13) powerful machine components (26, 12, 28 ... 38) are integrated and in a second liquid circuit (17) less powerful machine components (27, 42 ... 48) are integrated.

2. Liquid cooling system according to claim 1, **characterized in that** the first liquid circuit is provided for cooling powerful machine components in the form of motorized drives (2).

3. Liquid cooling system according to one or more of the preceding claims, **characterized in that** the second liquid circuit is provided for cooling less powerful machine components in the form of control devices (19).

4. Liquid cooling system according to one or more of the preceding claims, **characterized in that** the less powerful machine components are cooled by cooling air (18), which for re-cooling is fed to a heat exchanger (22), through which the cooling liquid (23, 24) flows.

5. Liquid cooling system according to one or more of the preceding claims, **characterized in that** the cooling liquid (23, 24), which absorbs heat from the cooling air (18) in the heat exchanger (22), and/or the cooling liquid (14, 16) for the motorized drives are fed to a heat exchanger (51, 52; 66, 68), through which heat-absorbing air (53, 54) or heat-absorbing liquid (67, 69) flows.

6. Liquid cooling system according to one or more of the preceding claims, **characterized in that** the cooling liquid is water.

7. Liquid cooling system according to one or more of the preceding claims 4 to 6, **characterized in that** one or more heat exchangers (R) are disposed above a production machine (1).

8. Liquid cooling system according to claim 4 to 6, **characterized in that** one or more heat exchangers are disposed alongside a production machine or outside of an operating area.

9. Liquid cooling system according to one or more of the preceding claims, **characterized in that** for cooling liquid pipes (14, 16; 23, 24) made of metal preferably aluminium are provided, which are coated internally with PE-Xc material, externally with PE-X material.

## Revendications

1. Système de refroidissement par liquide pour des composants de machines de production de l'industrie de transformation du tabac, **caractérisé en ce que** le refroidissement par liquide, conçu sous forme de système fermé, est partagé en au moins deux circuits de liquide (13, 17), des composants de machine de forte puissance (26, 12, 28...38) étant alors intégrés dans un premier circuit de liquide (13) et des composants de machine de plus faible puissance (27, 42...48), dans un deuxième circuit de liquide (17).

2. Système de refroidissement par liquide selon la revendication 1, **caractérisé en ce que** le premier circuit de liquide est prévu pour le refroidissement de composants de machine de forte puissance se présentant sous la forme de dispositifs d'entraînement motorisés (2).

3. Système de refroidissement par liquide selon une ou plusieurs des revendications précédentes, **caractérisé en ce que** le deuxième circuit de liquide est prévu pour le refroidissement de composants de machine de plus faible puissance se présentant sous la forme d'organes de commande (19).

4. Système de refroidissement par liquide selon une ou plusieurs des revendications précédentes, **caractérisé en ce que** les composants de machine de plus faible puissance sont refroidis par de l'air de refroidissement (18) qui, pour son propre refroidissement, est amené à un échangeur de chaleur (22), lequel est traversé par le liquide de refroidissement (23, 24).

5. Système de refroidissement par liquide selon une ou plusieurs des revendications précédentes, **caractérisé en ce que** le liquide de refroidissement (23, 24) absorbant de la chaleur issue de l'air de refroidissement (18) dans l'échangeur de chaleur (22) et/ou le liquide de refroidissement (14, 16) destiné aux dispositifs d'entraînement motorisés, sont amenés à un échangeur de chaleur (51, 52; 66, 68) qui est traversé par de l'air (53, 54) absorbant de la chaleur ou par du liquide (67, 69) absorbant de la chaleur.

6. Système de refroidissement par liquide selon une ou plusieurs des revendications précédentes, **caractérisé en ce que** le liquide de refroidissement est de l'eau.

7. Système de refroidissement par liquide selon une ou plusieurs des revendications précédentes 4 à 6, **caractérisé en ce qu'**un ou plusieurs échangeurs de chaleur (R) est ou sont disposé(s) au-dessus d'une machine de production (1).

8. Système de refroidissement par liquide selon l'une des revendications 4 à 6, **caractérisé en ce qu'**un ou plusieurs échangeurs de chaleur est ou sont disposé(s) à côté d'une machine de production ou à l'extérieur d'un local industriel.

9. Système de refroidissement par liquide selon une ou plusieurs des revendications précédentes, **caractérisé en ce qu'**il est prévu des conduites tubulaires (14, 16; 23, 24) en métal, de préférence en aluminium, pour du liquide de refroidissement, qui sont revêtues intérieurement d'un matériau dénommé PE-Xc et extérieurement d'un matériau dénommé PE-X.
